# EUROPEAN PATENT APPLICATION

(11) **EP 2 490 200 A2**
(43) Date of publication of application: **22.08.2012**
(21) Application number: 12156276.3
(22) Date of filing: 20.02.2012
(51) Int. Cl.: G08G 5/00, G09B 9/24

(54) **Systems and methods for providing a vehicle movement path simulation over a network**

(30) Priority: 21.02.2011 US 201113031528
(71) Applicant: Honeywell International, Inc., Morristown, NJ 07962-2245 (US)
(72) Inventor: Srivastav, Amit, Morristown, NJ New Jersey 07962-2245 (US); Nilagiri, Sathya Prakash, Morristown, NJ New Jersey 07962-2245 (US)
(74) Representative: Buckley, Guy Julian

(57) **Abstract**

Systems and methods are provided for rendering a vehicle movement path simulation over a network. The system comprises data sources including weather data, terrain data, navigation data and vehicle performance data. The system also comprises a client computing device configured to send a request for vehicle movement path simulation data, and a server in communication with the one or more data sources and the client computing device. The server comprises a processor configured to receive the request for vehicle movement path simulation data and deliver the vehicle movement path simulation data to the client computing device via the network. A method comprises determining a geographic position from the movement plan and retrieving data associated with the geographic position from the data sources. The method further comprises creating view volume data from the retrieved data and transmitting the view volume data over the network to a client computing device.

## Description

### TECHNICAL FIELD

The present invention generally relates to vehicle movement plan awareness, and more particularly relates to a network based system for simulating a three dimensional vehicle movement path over the network.

### BACKGROUND

A movement plan describes a proposed movement path of a vehicle from an origination location to a destination location. Movement planning requires accurate weather forecasts so that fuel consumption effects of wind and air temperature can be accounted for while the vehicle is in transit and for other operational safety considerations. For example, safety regulations specifically require aircraft to carry fuel beyond the minimum needed to fly from movement origin to movement destination, allowing for unforeseen circumstances or for diversion to another airport if the planned destination becomes unavailable.

Once a movement plan is completed, at least a portion of the movement plan may be filed with a regulatory authority. This is certainly the case with aircraft and may also be the case with ocean going vessels and ground transportation.

For aircraft, a flight plan is typically uploaded to an onboard Flight Management System (FMS). A flight plan typically does not include the segments of a movement plan from a hanger to a gate, between gates, from a gate to a destination hanger or between gates and runways during taxi.

Once uploaded, an FMS can visually render a flight plan textually as well as graphically to a user. To do so, navigation, weather, terrain and obstacle data may be retrieved from one or more databases based on the current position of the aircraft and overlaid upon each other to provide an integrated representation of an aircraft's situation and environment.

For example, terrain data is used for indicating unlikely events such as where in the movement plan the aircraft may pass uncomfortably close to a terrain feature. Similarly, obstacle information provides information concerning any man made obstacles which may, even remotely, impact aircraft during the movement plan, including vertical clearance for these objects. Weather information may be received from onboard weather radar systems, from satellite weather sources or from ground based locations. Similarly, an airport surface diagram may provide runway and taxiway information.

Modem graphics technology is capable of representing a loaded flight plan graphically in two dimensions (2D), three dimensions (3D) or both, thereby providing a pilot with a perspective view of the aircraft's surroundings, including the terrain, obstacles and weather. An exemplary method for producing a layered view volume may be found in U.S. Patent 7,095,423 which is hereby incorporated by reference in its entirety.

Currently, two and three dimensional flight plan rendering systems only illustrate point-to-point connections between waypoints making up the airborne portion of the aircraft's movement path. These conventional systems do not provide the flight crew with a complete pre-flight 3D awareness of the entire movement path which their aircraft is going to follow as it travels from hanger-to-hanger or gate-to-gate while performing the movement. Further, the entire movement path cannot be reviewed because the taxi pathway may be unknown or subject to change. Thus, to familiarize ones self with the fight plan, the pilot must access the FMS while onboard the aircraft.

Accordingly, it is desirable to provide a network based system that allows a pilot to review the entire movement path over a network. In addition, it is desirable to provide some "what-if' flexibility for those parts of the movement path over which the pilot may have discretion. Furthermore, other desirable features and characteristics of the present invention will become apparent from the subsequent detailed description of the invention and the appended claims, taken in conjunction with the accompanying drawings and this background of the invention.

### BRIEF SUMMARY

A system is provided for providing a simulation of a vehicle movement path over a network. The system comprises one or more data sources selected from a group consisting of weather data, terrain data, movement plan data, navigation data and vehicle performance data and a client computing device configured to send a request for vehicle movement path simulation data. The system further comprises a server in communication with the one or more data sources and the client computing device. The server comprises a processor configured to receive the request for vehicle movement path simulation data and to deliver the vehicle movement path simulation data to the client computing device via the network.

A method is provided for generating a movement path simulation for a vehicle over a network. The method comprises determining a geographic position of the vehicle and an altitude of the vehicle from a pre-defined movement plan. The method further comprises retrieving data associated with the geographic position and the altitude of the vehicle from one or more databases, creating view volume data from the retrieved data, and transmitting the view volume data over the network to a client computing device.

A method is provided for generating a movement plan simulation for a vehicle over the Internet. The method comprises determining a geographic position of the vehicle and an altitude of the vehicle from a pre-defined movement plan and requesting view volume data associated with the determined geographic position and the altitude of the vehicle from a server over a network. The method further comprises receiving view volume data associated with the geographic position from the server, and displaying a representation of the view volume data.

### BRIEF DESCRIPTION OF THE DRAWINGS

The present invention will hereinafter be described in conjunction with the following drawing figures, wherein like numerals denote like elements, and

FIG. 1 is a functional block diagram of an exemplary client-server system according to exemplary embodiments;

FIG. 2 is a simplified functional block diagram of a server suitable for producing a flight simulation according to exemplary embodiments;

FIG. 3A is an exemplary logic flow chart of a method for generating a movement plan simulation according to exemplary embodiments;

FIG.3B is an exemplary logic flow chart of a method for requesting and rendering a movement plan simulation in a client computing device according to embodiments;

FIG. 4 is a an exemplary view volume of a take off phase of a movement plan according to embodiments;

FIG. 5 is an exemplary web page incorporating a view volume according to embodiments and the controls thereof;

FIG. 6 is an exemplary altitude profile as may be displayed with a view volume according to embodiments; and

FIGS. 7A - 7D presents various exemplary view volumes illustrating portions of a takeoff phase of a movement plan.

### DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

Those of skill in the art will appreciate that the various illustrative logical blocks, modules, circuits, engines and algorithm steps described in connection with the embodiments disclosed herein may be implemented as electronic hardware, computer software, firmware or combinations of thereof. Some of the embodiments and implementations are described above in terms of functional and/or logical block components (or modules) and various processing steps. However, it should be appreciated that such block components (or modules) may be realized by any number of hardware, software, and/or firmware components configured to perform the specified functions. To clearly illustrate this interchangeability of hardware and software, various illustrative components, blocks, modules, circuits, and steps will be described generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention. For example, an embodiment of a system or a component may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments described herein are merely exemplary implementations.

The various illustrative logical blocks, modules, engines, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration. The word "exemplary" is used exclusively herein to mean "serving as an example, instance, or illustration." Any embodiment described herein as "exemplary" is not necessarily to be construed as preferred or advantageous over other embodiments.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal. A processor and any storage device are also considered herein to be non-limiting examples of computer readable media.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

Furthermore, depending on the context, words such as "connect" or "coupled to" used in describing a relationship between different elements do not imply that a direct physical connection must be made between these elements unless so stated. For example, two elements may be connected to each other physically, electronically, logically, or in any other manner, through one or more additional elements.

Although the systems and methods disclosed herein below are applicable to any vehicle type, the discussion will be limited to aircraft for the sake of brevity and clarity. To the extent aviation terms and concepts are used in the following discussion, it is contemplated that the analogous terms and concepts as they would apply to other vehicle types are intended to fall within the scope of the disclosure.

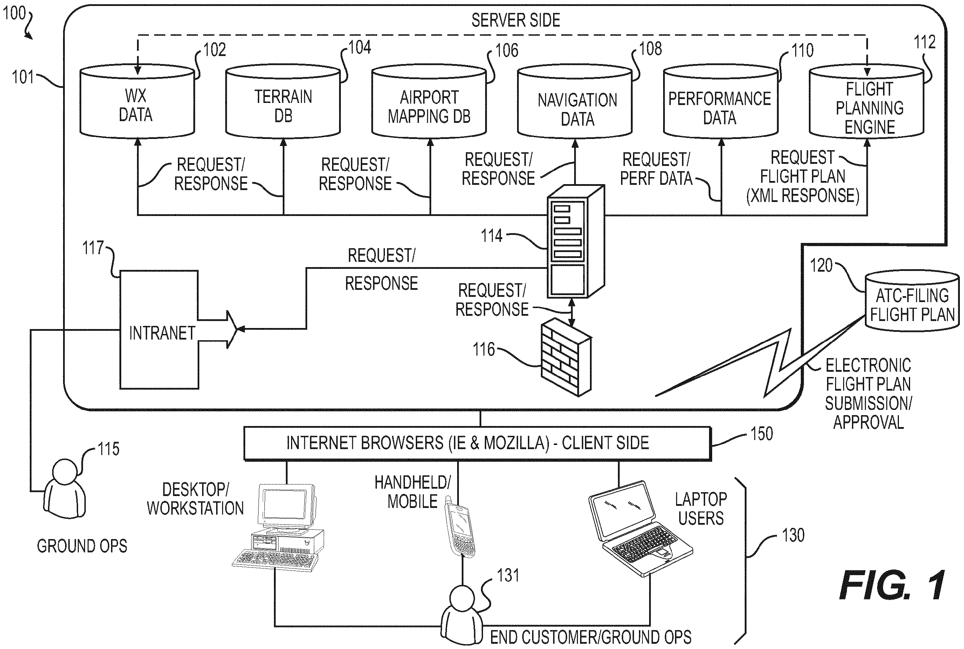

FIG. 1 is a simplified functional block diagram of an exemplary system 100 that may be used to construct a movement path of an aircraft from origination hanger or gate to a destination hanger or gate and to render it for viewing over a network (e.g., the Internet). Although the system of FIG. 1 is depicted as a client-server architecture, other architectures as may be known in the art may be utilized. In equivalent embodiments, the system of FIG. 1 may be used in conjunction with ships, aircraft trains, automobiles and other types of vehicles.

The client-server model of computing is a distributed application structure that partitions tasks or workloads between the providers of a resource or service, called servers, and service requesters, called clients. Often clients and servers communicate over a computer network on separate hardware, but both client and server may reside in the same system. A server machine is a host that is running one or more server programs which share their resources with clients. A client does not share any of its resources, but requests a server's content or service function. Clients therefore initiate communication sessions with servers which await incoming requests.

The exemplary system of FIG. 1 comprises at least one server side system 101 and at least one client computing device 130. The server side system 101 includes a least one computing device 114, which may be a server, a mainframe computer, a desktop computer, a laptop computer and the like. The server side system 101 may also include one or more databases. Exemplary databases may include a weather database 102, a terrain database 104, an airport mapping database 106, a navigation database 108, and an aircraft avionics/performance database 110.

As its name would imply, the weather database 102 contains weather data for any desired geographic area or flight path. The weather database 102 may contain information received from airborne weather radar, satellite and /or ground based weather monitoring facilities.

The terrain database 104 contains electronic map and charting data for any desired geographic area or movement path and provides data to create a digital visualization of actual terrain features and man made obstacles which is referred to herein as a view volume. The airport mapping database 106 contains electronic maps of various airport taxiways and other facilities and provides taxiway maps including height and location information for obstacles located at the various airports. The navigation database 108 contains navigation data for various established movement plans. The navigation database 108 also contains navigation data required for the flight to operate in specific geographical area. The aircraft performance database 110 contains design and performance information concerning a variety of airframes and engine types, including the height of eye of a pilot or operator. Those of ordinary skill in the art will appreciate that the above listed databases may be individual, stand alone databases that may be distributed across a network, they may be partitions of a single database or a combination thereof without departing from the scope of subject matter disclosed herein. Each database may also be resident in its own server whether the server is a computing device, a software object, firmware or any combination thereof.

The exemplary system of FIG. 1 may also comprise a flight planning engine or module 112. The flight planning engine 112 allows a user to construct a flight plan or a movement plan and may be any suitable flight planning system known in the art. An exemplary, non-limiting flight planning engine 112 may be the flight planning system described in patent 7,640,098 to Stenbock which is incorporated herein by reference in its entirety.

In preferred embodiments, the flight planning engine 112 maybe network based (e.g., Internet based) using the standard extensible markup language (XML) protocol. XML is a set of syntax rules for encoding data into machine-readable form and is widely used in transmitting text, video and audio files over the Internet. In equivalent embodiments, other Internet compatible protocols known in the art or devised in the future may also be used.

The exemplary system of FIG. 1 includes a server 114 that may be connected to the network via a secure firewall 116. The server 114 may be any suitable computing platform known in the art or that may be designed in the future.

In some preferred embodiments the server 114 may be a LAMP platform. LAMP is an acronym for a solution stack of free, open source software, originally coined from the first letters of the Linux operating system, the Apache HTTP Server, the MySQL database software and Perl/PHP/Python Internet programming language, each of which may be a principal component for building a viable web server.

The exact combination of software included in a LAMP package may vary, especially with respect to the web scripting software, as PHP may be replaced or supplemented by Perl and/or Python. Similar terms exist for essentially the same software suite (AMP) running on other operating systems, such as Microsoft Windows^{™} (WAMP), Mac OS^{™}(MAMP), Solaris^{™} (SAMP), or OpenBSD^{™} (OAMP).

The server 114 and the various databases 102-110 may be accessed by a movement planner 115 over the network to create a movement plan. The access may be external through the firewall 116 or from inside the firewall via a local intranetwork 117. Once created, the entire movement plan or segments thereof may be filed electronically in a regulatory authority database 120 such as that of the Federal Aviation Administration (FAA).

Via the client device 130, the server 114 may also be accessed by an end user (e.g., a pilot) 131 over the Internet via gateway and/or firewall 116 using a standard browser 150 launched by the client computing device 130. The client computing device 130 may be any personal computing device known in the art or a device incorporated into a vehicle. Non-limiting examples of personal computing devices include a lap top computer, a desktop computer, a personal digital assistant (PDA), a cellular telephone and the like.

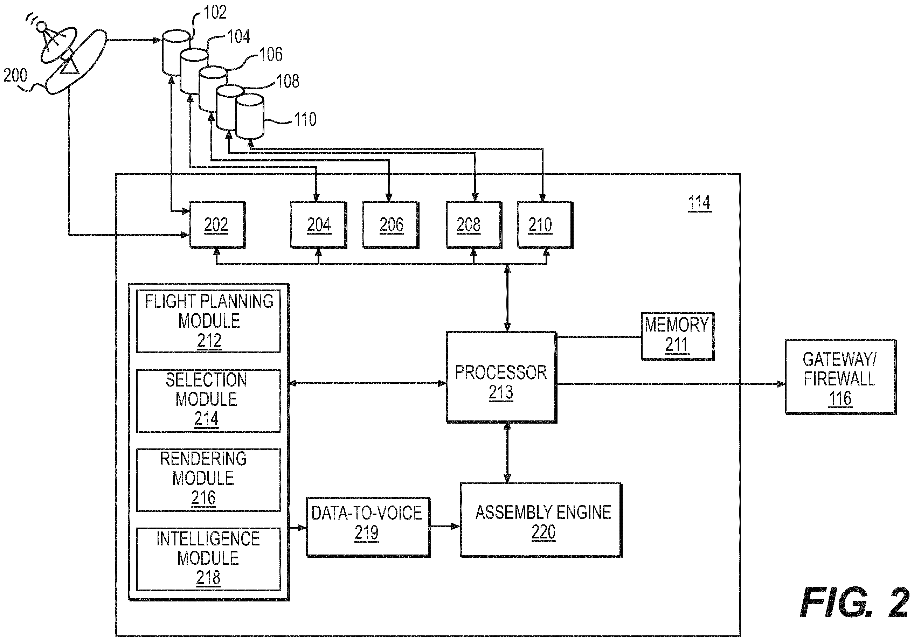

FIG. 2 is an exemplary functional block diagram of the server 114. The server 114 may include a data manager (202-210) for each database (102-110). For example, the weather data manager 202 may be a component of the server 114 that retrieves weather data from the weather database 102 and then processes/formats the weather data for use by another component such as rendering module 216. The weather data manager 202 may also access real time weather data from other sources such as weather radar, which may be a ground based or an airborne radar system, via a datalink 200.

Similarly, a charts data manager 204, an airport mapping data manager 206, a navigation data manager 208 and an aircraft performance data manager 210 each retrieves data from the terrain database 104, airport mapping database 106, navigation database 108 and aircraft performance database 110, respectively. The data managers 204-210 process/format the data retrieved from the respective databases for use by other system components. The data managers 202-210 are particularly useful if the data in the databases 102-110 exists in disparate formats because they allow flexibility in sourcing data from a variety of sources. To the extent that databases share data formats and protocols, fewer data managers than databases may be used. Those of ordinary skill in the art will appreciate that the above noted data sources (102-110) and data managers (202-210) may be combined into fewer data sources/managers or expanded into more or additional data sources/managers as may be found to be convenient without departing from the scope of the disclosure herein.

The server 114 also includes a processor 213 controlled by an operating system. The operating system may be any suitable operating system known in the art. In some exemplary embodiments, the operating system may be the Linux operating system. The processor 213 may be any suitable processor or combination of multiple processors known in the art or that may be devised in the future that can run the desired operating system. The processor 213 may be or may operate in conjunction with one or more graphics processors as may be known in the art for generating digital image data for distribution over the network.

The processor 213 is in operable communication with the flight planning module 212, a selection module 214, the rendering module 216, an intelligence module 218, an assembly engine 220 and a memory 211. In equivalent embodiments the flight planning module 212, the selection module 214, the rendering module 216, the intelligence module 218, and the assembly engine 220 may be implemented as software objects residing in memory 211, residing in or in communication with the processor(s) 213, and may be executed by the processor(s). In other embodiments the flight planning module 212, the selection module 214, the rendering module 216, the intelligence module 218, and the assembly engine 220 may be implemented as computing devices or firmware.

The flight planning module 212 allows a movement planner 115 (of FIG. 1) to create a movement plan using the server 114 either directly, or via a network, and store the movement plan into the navigation database 108. A movement plan is a planned or pre-defined movement path of the vehicle between an origination point and a destination point. The movement path of the vehicle may include one of an altitude above a reference altitude or a depth below sea level (e.g., for submarine) at each geographic position along the movement path. Either or both of the server 114 and the client computing device 130 may advance through, or in other words "virtually traverse," the movement plan from one geographic point of the movement path to another that has yet to be traversed.

The server 114 may include the selection module 214. The selection module 214 determines a specific geographic location and altitude on the movement path from which the view volume may be rendered. As the movement plan is virtually traversed from one geographic point to another, the selection module determines the next incremental position along the movement path for which associated data will be called and received from the databases 102-110. The selection module then determines the geographic positions/altitudes of the desired view volume. The geographic position determinations may depend upon the virtual speed of the vehicle stipulated in the movement plan, the scale of the client display upon which the view volume is being rendered and other factors as may be found to be relevant. For example, for vehicles virtually traveling at very fast speeds or for view volumes that do not change materially, the selection module may skip one or more geographic location points to conserve computing resources.

In equivalent embodiments, the client computing device 130 may contain the movement plan. As the client computing device 130 virtually traverses each geographic point along the movement plan, the client computing device 130 may request a view volume for that point and the next successive geographic point in the movement plan for which associated data will be called.

In some embodiments, the selection module 214 may determine multiple incremental geographic points for subsequent processing as a group. This may be particularly advantageous during portions of the movement path where data is changing slowly or not at all such as during a mid-ocean transit on a clear sunny day. In still further embodiments, when data is changing slowly or not at all, the client computing device 130 may repeat the rendering of the previous view volume(s) already received by the client computing device in order to reduce data traffic flow and relieve the burden on the server 114.

The server 114 may include the assembly engine 220. The assembly engine 220 receives the data called from the databases 102-110 that is associated with a specific geographic location/altitude point along the movement path and assembles a 2D and/or 3D digital display or a view volume as it may be observed by the operator of the vehicle at a given geographic location and altitude/height of eye. This perspective view is also referred to from time to time herein as the "pilot eye."

The assembly engine 220 may use specific geographic location, heading and altitude information selected from along the movement path to call terrain data from the terrain database 104 and/or the airport mapping database 106 that is associated with the specific geographic location of the aircraft. When taxiing an aircraft, the height of eye above the runway and the direction of travel may be retrieved from the aircraft performance database 110. A digital 3D terrain layer may then be created as part of the view volume as perceived from the perspective of the pilot eye.

The assembly engine 220 may apply the weather data associated with the same geographic location to create a 2D or 3D graphical weather overlay (e.g., rain clouds, snow, and lightning) of the 3D terrain layer. The visual perspective of the weather from the pilot eye would be determined by the heading of the aircraft and the stored altitude/height of eye. Thus, depending on the altitude, the pilot eye may be looking at, looking down upon or looking up into various weather features. These features may include the sun, moon, and other celestial bodies, if so desired.

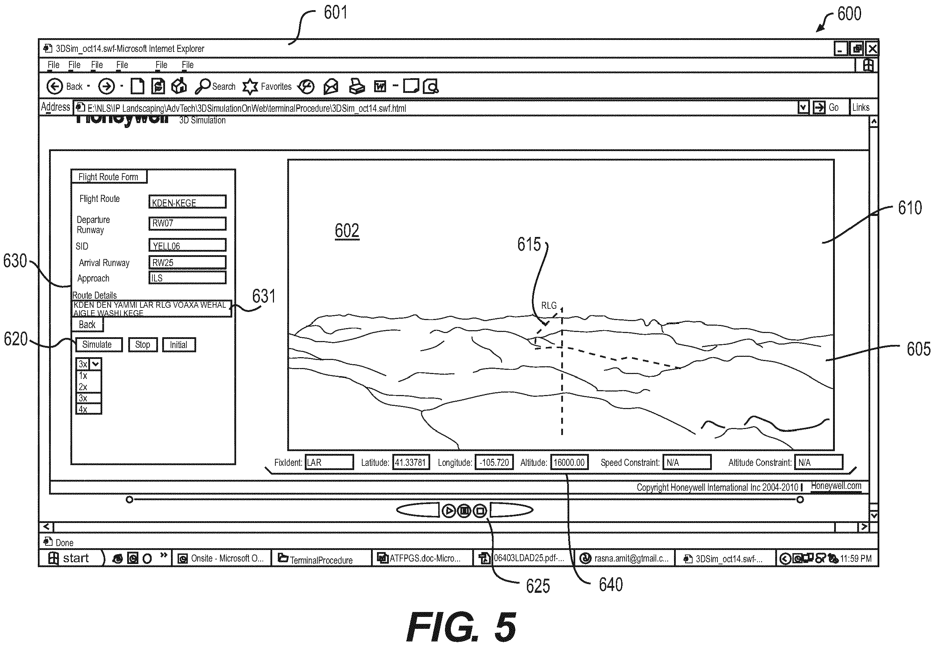

The assembly engine 220 may also call for additional navigation data from the navigation database 108 concerning specific geographic/altitude points along the movement path and that are in advance of the current geographic position of the pilot eye. These points may be used to render a visible pathway in three dimensions that an aircraft will be flying, which gives a unique valuable perspective to a pilot familiarizing himself with a particular flight. (See, e.g., FIG. 5, #615). In embodiments, the view volume may be constructed using known rendering algorithms where data is converted into graphical objects and executed on the graphical frame buffer.

After assembly, the 3D view volume may be processed for rendering on the client computing device 130 by the rendering module 216 as may be known in the art. The rendering module 216 adjusts the view volume to correspond to a web page interface. The widow within the web page interface of the client computing device 130 will be resized according to the level of detail required.

The server 114 may also include an intelligence module 218. The intelligence module 218 receives the constructed view volume data from the assembly engine 220, converts the data to ASCII format, parses the ASCII data, and feeds selected portions of the parsed data to a data-to-voice conversion system 219.

The data-to-voice conversion system 219 takes portions of the parsed ASCII data associated with a particular view volume and creates a brief voice narrative in audio XML format for a particular view volume or for a series of view volumes. For example, for a given geographic location the parsed course, speed, altitude and weather data may be compiled into the audio file by the digital-to-voice conversion system 219, which will be played to a user that announces "course 110°, speed 200 knots, thunder storms, visibility ceiling dropping to 10,000 feet." Because the weather data maybe continually updated, the audio and the view volume will change from one virtual traversal of the movement plan to the next. Thus, the same movement plan may be used by a pilot to familiarize himself with the changing weather conditions over time along the movement path periodically prior to boarding the flight.

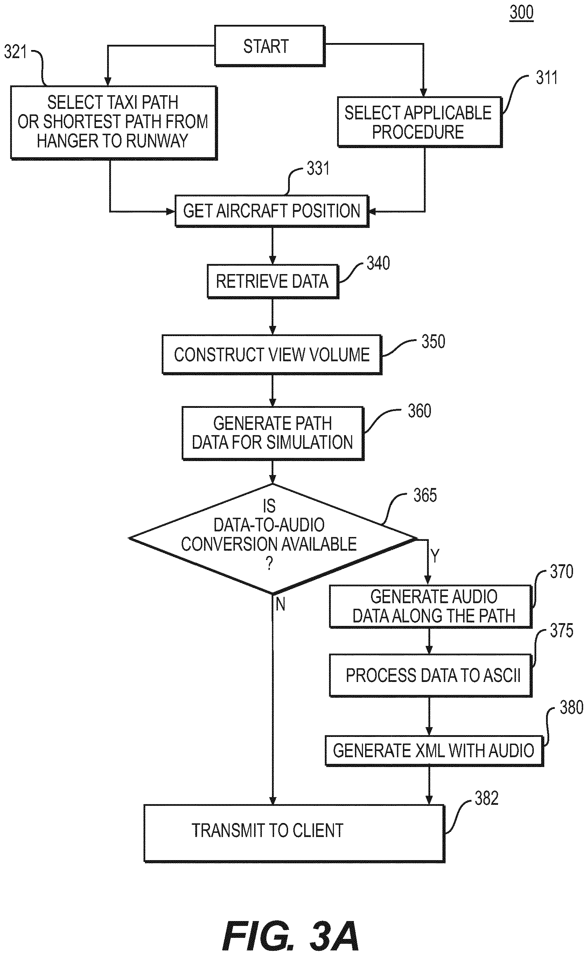

FIG. 3A is a logic flow chart of an exemplary method 300 utilizing the subject matter disclosed herein to render a 2D/3D visual representation of the movement plan of an aircraft. At process 311, an air traffic control (ATC) procedure selection may be received from the client computing device 130 that may limit the movement of an aircraft within the terminal area. At process 321, a taxi path selection may be received from the client computing device 130. This taxi path may be the shortest pathway or one that is dictated by the ATC 120.

At process 331, one or more incremental aircraft positions (e.g., Latitude, Longitude and Altitude) are determined from the movement plan data by the selection module 214. These positions may be selected as the movement plan is virtually traversed during simulation. In equivalent embodiments, multiple geographic positions may be determined in advance of the simulation and stored in a memory, such as memory 211. Based on the geographic position(s)/altitude(s) selected from along the movement plan, data associated with the selected positions is retrieved from the various databases (102-110) at process 340.

At process 350, the assembly engine 220 receives the various, terrain, obstacle and weather data from databases (102-110). The data are used to create a 3D view volume that is associated with each geographic position. The assembly engine 220 and then layers obstacle and weather views over the terrain view. Each of the terrain, weather and obstacle views is referenced to the exact same location in creating the view volume. For example, when the aircraft is taxiing at an airfield, the view volume will show a simulation of the environs of the airfield as seen from the perspective of the pilot eye.

It should be noted that, in some embodiments, the simulated weather view may change each time the simulation traverses a particular position. This may be so because any change in the weather data retrieved at a later time from the weather database for that geographic position would present itself as a different weather overlay.

At process 360, the visible path ahead of the aircraft is generated by the assembly engine and inserted within the view volume. The visible path may resemble a series of dots or a line extending through the view volume. The visible path is based on the future positions and altitudes of the aircraft as it traverses the movement plan and provides a vehicle operator an awareness of his future movement path.

At decision point 365, it is determined whether or not the data-to-voice conversion system 219 is available. If not, the method proceeds to process 382. If so, then the data retrieved from the databases 102-110 in respect to each geographic position determined by the selection module 214 are parsed at process 370 by the intelligence module 218. Parsing of data may be done using customized developed parser or may be accomplished by any other parser known in the art or that may be developed in the future.

As an example, a short Meteorological Terminal Aviation Routine Weather Report (METAR) message is presented below by way of an example of weather data. METAR is a common format for reporting weather information. A METAR weather report is predominantly used by pilots in fulfillment of a part of a pre-flight weather briefing. Raw METAR data is highly standardized by the International Civil Aviation Organization (ICAO), which allows it to be understood throughout most of the world. Prior to parsing, the exemplary METAR data message may read:
KIAD METAR 081152Z 27007KT 10SM FEW150 M04/M13

After parsing, the retrieved data is processed into ASCII format at process 375 by the intelligence module 218. It will be appreciated by those of ordinary skill in the art that translation from any particular data format into ASCII format is well know in the art.

At process 380, the METAR ASCII audio message data is combined with ASCII data retrieved and converted from the other databases (104-110). The combined data is the digital view volume data. The combined ASCII view volume data is further processed by the intelligence module 218 to into XML format including audio XML.

The XML data is then transmitted via the network from the server 114 to the client computing device 150 for rendering to the user at process 382. In equivalent embodiments the XML data may be transmitted to a client computing device 130 via the Internet. Thus, when a subsequent view volume along the movement path is requested by the client computing device 130 and is compiled at the server 114, the file containing the view volume information is transmitted in XML format to the client computing device in process 381 for rendering.

Transmission across the network is accomplished by transferring web pages containing the XML view volume data for each view volume using any one of several browsers (150 of FIG. 1). A browser is a software application for retrieving, presenting, and traversing information resources on the network. In using a browser, an information resource at remote location is identified by a Uniform Resource Identifier (URI) and may be a web page, an image, a video or other piece of content. Although browsers are primarily intended to access the Internet, they can also be used to access information provided by Web servers in private networks or files in file systems. Some browsers can also be used to save information resources to file systems. Non-limiting examples of a browser includes Internet Explorer^{™}, Mozilla^{™}, and Safari^{™}.

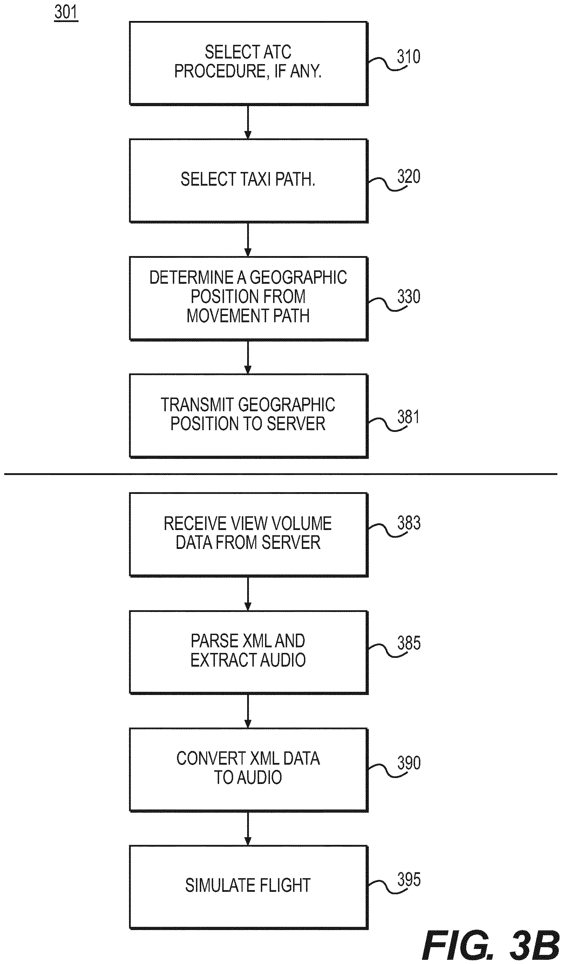

FIG. 3B is a logic flow chart of an exemplary method 301 utilizing the subject matter disclosed herein to render a 2D/3D visual representation of the movement plan of an aircraft. At process 310, any ATC pre-defined procedures that may limit the movement of an aircraft within the terminal area may be selected from a menu or a drop down box on the client computing device 130 containing the various taxi procedures (See, FIG. 5, #630).

At process 320, a taxi path from the hanger to the end of the runway may be selected by the end user 131 from a plan view of the terminal area that indicates one of more pre-defined and selectable taxi paths. This path may be the shortest pathway or one that is dictated by the ATC 120 (See, FIG. 1).

At process 330, a geographic position and altitude is determined by the client computing device 130 from a movement track selected by the end user 131 from a movement plan track previously loaded into the client computing device 130. The movement plan track may be resident in a library stored on the client computing device or it may be down loaded from the navigation database 108 after the client computing device 130 has logged into the server 114. The geographic location selected may also be dependent on the taxi path selected at process 320 and the ATC procedure selected in process 310.

The client computing device 130 sends a request message for view volume data associated with an initial geographic point and altitude and a subsequent request messages for each successive determined geographic point and altitude as the client computing device 130 virtually traverses the movement path. In other embodiments, the request may be made more or less often. For example, if several successive view volumes do not differ materially, a single request resulting in a single rendering of a single view volume may be sufficient to preclude the requesting of multiple view volumes un-necessarily and reduce computing overhead.

A request for view volume data may be triggered in any of several ways. As non-limiting examples, a request may be triggered based on the expiration of a time limit, after a virtual traversal of a specific distance threshold along the movement track has been completed, after a traversal of a specific geographic point, or after each successive geographic point. Further, should a request be triggered by the passing of a distance, that distance may vary based on the speed of the vehicle. For example, the distance threshold may be smaller at slow vehicle speeds and larger at rapid vehicle speeds. Those of ordinary skill in the art will recognize that the request triggers mentioned above are merely exemplary. Other request trigger may be defined as may fit a particular design requirement.

When the view volume in XML format is received at the client computing device 130, the XML data is parsed at process 385 as is known in the art and the audio data is extracted. However, the audio data remains synchronized with the video portion of the view volume associated with the same geographic location and is played to the user 131 while the user is viewing the associated view volume.

At process 390, the audio XML data is converted to an audio file for playing for a user 131 by the client computing device 130. For example, the audio file that corresponds to the weather METAR data discussed above may have the form:
"Domestic Notams, Washington Dulles International, Washington, DC. Time of observation zero eight December, eleven hours fifty two minutes U T C. Wind direction two seven zero degrees. Wind speed is zero seven knots. Visibility is one zero statute miles. Clouds few at fifteen thousand feet. Temperature is minus zero four degrees. Dew point is minus thirteen. End of observation."
The expansion of the METAR message into understandable language (e.g., English) that is evident in the above example audio file as compared to the actual METAR message, is accomplished at process 375 and 380 (See, FIG. 3A) by the intelligence module 218. In the METAR example, the intelligence module 218 is able to recognize the various portions of the parsed METAR message and is able to expand and embellish those portions into audible speech. The same type of embellishment can be applied to data retrieved from the terrain and other databases 104-110.

At process 395, the view volume(s) are rendered by the client computing device on a display while the audio file that is associated with the view volume(s) is provided to the pilot as the view volume is displayed. Because a view volume is created on a location-by-location basis as the vehicle position along the movement plan moves to the next incremental discrete geographic location, new data is retrieved from the data bases 102-110, processed and downloaded on a real time basis. Hence, the need to compile an entire flight simulation and then load and run the entire simulation like a recorded movie is eliminated.

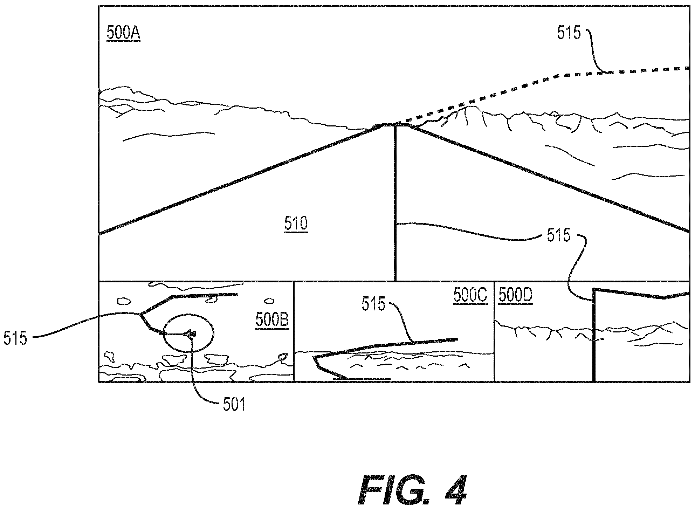

FIG. 4 is an exemplary screen shot 500 of a 3D view volume created assuming that the current position of the aircraft 501 is located on a runway. The 3D view volume illustrates a runway 510 and a movement path 515 from various defined view aspects. View 500A is a pilot eye view from the runway showing that the movement path is down the runway and then banks right and increases in altitude as the aircraft leaves the runway. View 500B shows a plan view, which includes the aircraft 501 and the movement path 515 as it banks right and steadies on a new course. View 500C is the same view as 500B but at an oblique angle to impart an altitude perspective and adds waypoint identifiers. View 500D provides a "next segment" view from the end of the runway in the direction of the next movement plan segment to give the pilot an advanced time view of the flight.

FIG. 5 is a pilot eye view 600 of an approach simulation as it appears using a browser 601. The exemplary pilot eye view includes the 3D view volume 602. In this example the view volume includes a terrain rendering 605 derived from the data retrieved from the terrain database 104 that is overlaid by a weather rendering 610 derived from the data retrieved from the weather database 102. In addition, the movement path 615 is further overlaid on the view volume which is derived from the movement plan data. Note the waypoint "RLQ" is presented as a reference point along the movement path 615.

The pilot eye view volume is controlled by user inputs into the control panel 630. The control panel 630 displays movement information. In this example, the flight route information is presented between waypoints "KDEN" (Denver International Airport) and "KEGE" (Eagle County Regional Airport). The departing runway from Denver is "RW07" and the arrival runway in Eagle County is "RW25." The landing at Eagle County will be an Instrument Landing System approach (ILS). The waypoints for the flight portion of the movement path are included in the Route Details display box 631.

The speed of the flight simulation in the view volume 602 may be increased up to 12 times normal flight speed in some embodiments. The simulation may be started, stopped, initialized and reversed by manipulating the appropriate control button 620 in the control panel 630. The controls 625 allow a user to advance the simulation's geographic location in relation to time of flight.

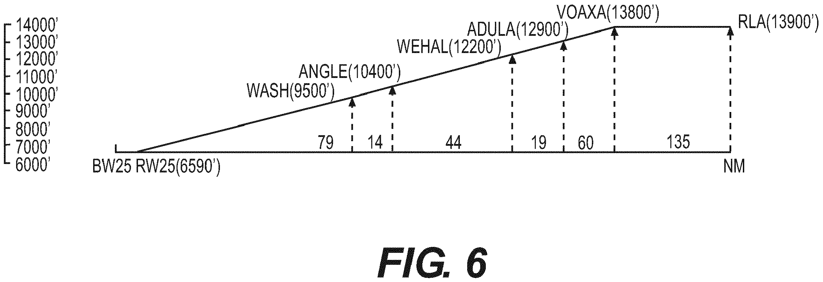

The aircraft location 640 from which the Pilot Eye view is presented is displayed under the view volume The aircraft location information includes a geographic fix identification, the longitude, the latitude, and the aircraft altitude. In this particular example, there are not altitude or speed constraints applied to the simulation. The progress of the simulation in the view volume 602 may be started stopped or paused by simulation controls 625. FIG. 6 presents an additional example that illustrates the altitude profile of the same climb phase as the pilot eye view of FIG. 5.

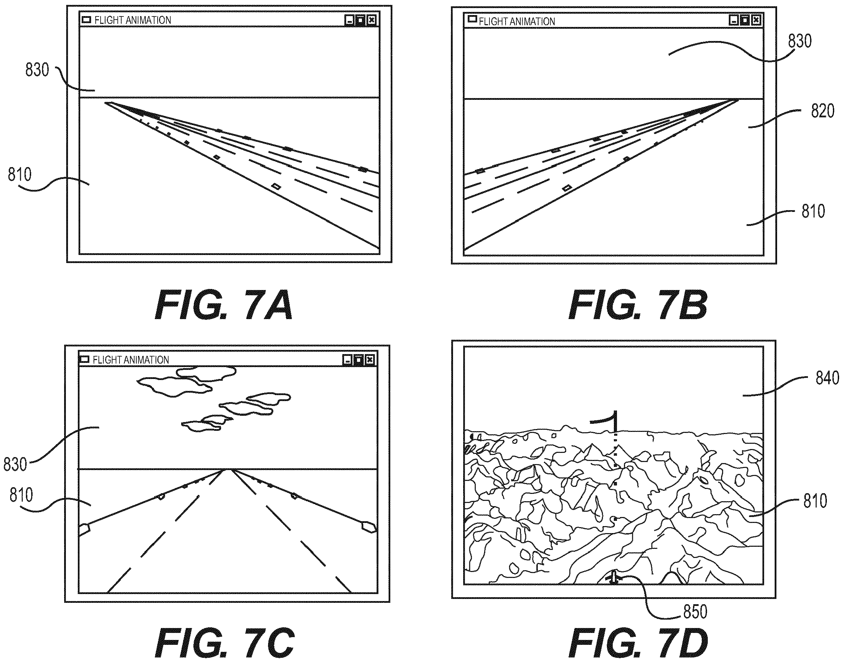

FIGs. 7A-D present a compilation of additional exemplary views illustrating various view volumes including various information renderings. FIGs. 7A-7C present three different perspectives of a runway that include terrain information 810 derived from the terrain database 104 that is overlaid with runway information 820 derived from the airport mapping database 106. FIGsFIGs. 7A and 7C also include weather data 830 that is derived from the weather database 102 and overlaid over the terrain data 810. In contrast, FIG. 7D illustrates the pilot's eye view volume for cruise phase of a flight plan that includes a visual track 840 flown by aircraft 850.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A system for providing a simulation of a vehicle movement plan over a network, comprising:
one or more data sources containing data selected from a group consisting of weather data, terrain data, movement plan data, navigation data and vehicle performance data; and
a server in communication with the one or more data sources, the server comprising a processor configured to receive a request for vehicle movement path simulation data from a client computing device, create the vehicle movement path simulation data from the selected data and to deliver the vehicle movement path simulation data to a client computing device via the network.

2. The system of claim 1, wherein the vehicle movement path simulation data comprises view volume data for a geographic point along the vehicle movement path.

3. The system of claim 2, further comprising a selection module configured to determine the geographic position and an associated altitude along a vehicle movement path and to call data associated with the determined geographic position and altitude from each of the one or more data sources.

4. The system of claim 2, further comprising an assembly engine configured to create a view volume data by layering a digital display of the weather data and the navigation data over a digital display of the terrain data.

5. The system of claim 4, wherein the assembly engine is further configured to insert symbology into the view volume data, the symbology representing geographic positions from portions of the vehicle movement path yet to be virtually traversed.

6. The system of claim 4, further comprising an intelligence module configured to:
receive the view volume data,
convert the view volume to ASCII formatted view volume data,
parse the ASCII formatted view volume data, and
feed selected portions of the parsed ASCII formatted view volume data to a data-to-voice conversion system.

7. The system of claim 6, wherein the system further comprises a data-to-voice conversion system which is configured to convert ASCII view volume data into audio extensible markup language (XML) data.

8. The system of claim 7, wherein the intelligence module associates the audio XML data with its corresponding view volume.

9. The system of claim 6, further comprising a rendering module configured to adjust the view volume data to accommodate a particular web page interface with the client computing device.

10. A method for generating a movement plan simulation for a vehicle over a network by a server, comprising:
determining a geographic position of the vehicle and an altitude of the vehicle from a pre-defined movement plan;
retrieving data associated with the geographic position and the altitude of the vehicle from one or more databases;
creating view volume data from the retrieved data; and
transmitting the view volume data over the network to a client computing device.
